(19) **Europäisches Patentamt European Patent Office Office européen des brevets**

(11) **EP 4 367 565 B1**

(12) **EUROPEAN PATENT SPECIFICATION**

(45) Date of publication and mention of the grant of the patent:
**15.10.2025 Bulletin 2025/42**

(21) Application number: **21745921.3**

(22) Date of filing: **05.07.2021**

(51) International Patent Classification (IPC):
**G05D 1/00** (2024.01)    **G06T 17/05** (2011.01)
**G01C 3/02** (2006.01)    **G01S 17/00** (2020.01)

(52) Cooperative Patent Classification (CPC):
**G01C 3/02; G01S 7/4808; G01S 17/88; G01S 17/89; G05D 1/0094**

(86) International application number:
**PCT/EP2021/068439**

(87) International publication number:
**WO 2023/280370 (12.01.2023 Gazette 2023/02)**

(54) **USING A DRONE TO AUTOMATICALLY OBTAIN INFORMATION ABOUT A STRUCTURE**

VERWENDUNG EINER DROHNE ZUR AUTOMATISCHEN GEWINNUNG VON INFORMATIONEN ÜBER EINE STRUKTUR

UTILISATION D'UN DRONE POUR OBTENIR AUTOMATIQUEMENT DES INFORMATIONS CONCERNANT UNE STRUCTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.05.2024 Bulletin 2024/20**

(73) Proprietor: **Telefonaktiebolaget LM Ericsson (publ)**
**164 83 Stockholm (SE)**

(72) Inventors:
• **GRANCHAROV, Volodya**
**171 67 SOLNA (SE)**
• **COMBES, Steven**
**WORTHING, BN13 IQT (GB)**
• **SVERRISSON, Sigurdur**
**19632 Kungsängen (SE)**

(74) Representative: **Ericsson Patent Development**
**Torshamnsgatan 21-23**
**164 80 Stockholm (SE)**

(56) References cited:
**EP-A1- 3 062 066**

• **SUNDAR KANNAN SHYAM ET AL: "Autonomous Drone Delivery to Your Door and Yard", 12 April 2021 (2021-04-12), XP055919986, Retrieved from the Internet <URL:https://arxiv.org/pdf/2104.05503.pdf> [retrieved on 20220511]**
• **TONINI ANDREA ET AL: "Remote Estimation of Target Height from Unmanned Aerial Vehicle (UAV) Images", REMOTE SENSING, vol. 12, no. 21, 2 November 2020 (2020-11-02), pages 3602, XP055902545, DOI: 10.3390/rs12213602**
• **SHYAM SUNDAR KANNAN ET AL: "Door Delivery of Packages using Drones", ARXIV.ORG, CORNELL UNIVERSITY LIBRARY, 201 OLIN LIBRARY CORNELL UNIVERSITY ITHACA, NY 14853, 12 April 2021 (2021-04-12), XP081935564**
• **STOKKELAND MARTIN ET AL: "Autonomous visual navigation of Unmanned Aerial Vehicle for wind turbine inspection", 2015 INTERNATIONAL CONFERENCE ON UNMANNED AIRCRAFT SYSTEMS (ICUAS), IEEE, 9 June 2015 (2015-06-09), pages 998 - 1007, XP033171561, DOI: 10.1109/ICUAS.2015.7152389**

**Description**

TECHNICAL FIELD

Disclosed are embodiments related to obtaining information about a structure using a drone equipped with a sensor system.

BACKGROUND

A mobile network operator may have many cell sites (e.g., locations at which a cell tower is located and antennas or other equipment may be connected to the tower). In order to manage the equipment at these many different cell sites, the mobile network operator may create a "digital twin" of the sites (i.e., a digital replica of the site), an example of which is a three-dimensional (3D) point cloud of the site. Consistent data acquisition is an important step in the process of creating digital twins of the cell sites. In case of 3D point clouds generated by means of imagery data obtained using a camera carried by an aerial vehicle (hereafter "drone"), data consistency means correct drone position relative to the object of interest (e.g., the cell tower or other structure). For a Tower Site Overview (TSO) orbit, the drone's camera is usually pointed down at the cell tower at 45° and the drone distance from the tower is such that the projection of the tower in the image plane occupies a central area of the image.

In order to position the drone in the preferred TSO orbit around the cell tower to be analyzed, it is helpful to obtain information about the cell tower, such as, for example the three-dimensional (3D) point that coincides with a centroid of the cell tower (e.g., a centroid of a top surface of the tower) as well as the 3D points that coincide with the top and bottom of the structure, respectively.

TONINI ANDREA ET AL: "Remote Estimation of Target Height from Unmanned Aerial Vehicle (UAV) Images", Remote Sensing, vol.12, no. 21, 2 November 2020, focuses on how the height of a target can be estimated using images acquired by a digital camera installed into moving platforms, such as unmanned aerial vehicles (UAVs).

SUMMARY

Certain challenges presently exist. For instance, the optimal drone positioning is presently achieved by a person (the "pilot") manually navigating the drone to determine the 3D points mentioned above. Such a manual process leads to inconsistencies in the collected data and consequently lower quality of the generated 3D point clouds.

The solution is provided by the features of the independent claims.

Accordingly, in one aspect there is provided a method for obtaining information about a structure using a drone equipped with a sensor system. The method includes, during a first period of time and while the drone's sensor system is pointing towards the structure, using the sensor system to obtain first depth data. The method also includes obtaining a first height value, Z1, indicating or being based on the height of the drone above a bottom point of the structure during the first period of time. The method also includes using the first depth data to determine a first vertical coordinate representing a top point of the structure. The method further includes estimating a height of the structure, wherein estimating the height of the structure comprises using the first vertical coordinate and the first height value, Z1, to estimate the height of the structure.

In another aspect there is provided an apparatus for obtaining information about a structure using a drone equipped with a sensor system. The apparatus is configured to, during a first period of time and while the drone's sensor system is pointing towards the structure, use the sensor system to obtain first depth data. The apparatus is further configured to obtain a first height value, Z1, indicating or being based on the height of the drone above a bottom point of the structure during the first period of time. The apparatus is further configured to use the first depth data to determine a first vertical coordinate representing a top point of the structure. The apparatus is further configured to estimate a height of the structure, wherein estimating the height of the structure comprises using the first vertical coordinate and the first height value, Z1, to estimate the height of the structure.

In another aspect there is provided a method for obtaining coordinates associated with a structure. The method includes positioning a drone above the structure, wherein the drone is equipped with a sensor system. The method also includes, while the drone is above the structure and the drone's sensor system is pointing towards the structure, using the sensor system to obtain first depth data. The method also includes based on the first depth data, identifying a point-of-interest on the structure. The method also includes determining a position of the point-of-interest in a two dimensional plane. The method also includes based on the determined position of the point-of-interest in the two dimensional plane, determining whether or not the drone should be re-positioned. The method also includes, if it is determined that the drone should be re-positioned, causing the drone to move to a new position. The method also includes determining x and y coordinates of a current position of the drone. The method also includes setting x and y coordinates for the point-of-interest based on the determined x and y coordinates of the current position of the drone.

In another aspect there is provided an apparatus for obtaining coordinates associated with a structure. The apparatus is configured to position a drone above the structure, wherein the drone is equipped with a sensor system. The apparatus is further configured to, while the drone is above the structure and the drone's sensor system is pointing towards the structure, use the sensor system to obtain first depth data. The apparatus is further configured to, based on the first depth data, identifying a point-of-interest on the structure. The apparatus is further configured to determine a position of the point-of-interest in a two dimensional plane. The apparatus is further configured to, based on the determined position of the point-of-interest in the two dimensional plane, determine whether or not the drone should be re-positioned. The apparatus is further configured such that, if it is determined that the drone should be re-positioned, the apparatus causes the drone to move to a new position. The apparatus is further configured to determine x and y coordinates of a current position of the drone. The apparatus is further configured to set x and y coordinates for the point-of-interest based on the determined x and y coordinates of the current position of the drone.

In another aspect there is provided a computer program comprising instructions which when executed by processing circuitry of an apparatus causes the apparatus to perform any of the methods disclosed herein. In one embodiment, there is provided a carrier containing the computer program wherein the carrier is one of an electronic signal, an optical signal, a radio signal, and a computer readable storage medium.

An advantage of the embodiments disclosed herein is that they reduce the cost and improve the accuracy of all applications related to digitalization of telecom assets. In addition to the outlined telecom scenario, the embodiments are applicable in other situations as well, such as, for example, estimating points of interest in high-voltage transmission poles and similar tall structures.

BRIEF DESCRIPTION OF THE DRAWINGS

The accompanying drawings, which are incorporated herein and form part of the specification, illustrate various embodiments.

FIG. 1 illustrates a cell tower and a drone having a sensor system for determining one or more points-of-interest with respect to the cell tower.

FIG. 2 illustrates a manual process for determining points-of-interest with respect to the cell tower.

FIG. 3 illustrates a process for automatically obtaining an estimate of the height of the cell tower according to some embodiments.

FIG. 4 illustrates a process of estimating the coordinates of the center of the cell tower according to some embodiments.

FIG. 5 illustrates a depth filtering operation according to some embodiments.

FIG. 6 is a flowchart illustrating a process according to some embodiments.

FIG. 7 is a flowchart illustrating a process according to some embodiments.

FIG. 8 shows an apparatus according to some embodiments.

DETAILED DESCRIPTION

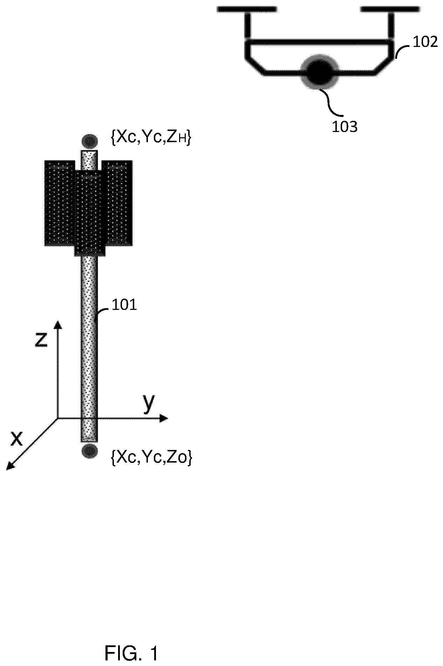

FIG. 1 illustrates a cell tower 101 and a drone 102 having a sensor system 103 for determining one or more points-of-interest with respect to cell tower 101. In this example, the cell tower 101 has two points-of-interest: 1) a first point located at the 3D point $\{Xc, Yc, Z_H\}$ (i.e., a top center point of the tower) and 2) a second point located at the 3D point $\{Xc, Yc, Z_0\}$ (i.e., a bottom center point of the tower). Accordingly, the center of the tower on the XY plane is denoted $\{Xc, Yc\}$. Because $Z_0$ is the altitude at the drone's home point, which is known, in order to determine these points-of-interest, the drone must implement a process for determining $\{Xc, Yc\}$ and $Z_H$.

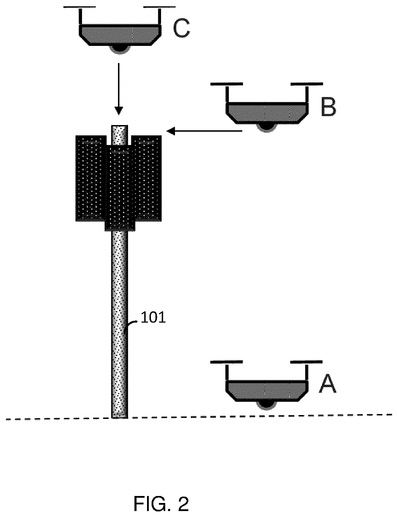

As noted above, $\{Xc, Yc\}$ and $Z_H$ are presently estimated by having a pilot manually navigate the drone. Such a manual process leads to inconsistencies in the collected data and consequently lower quality of the generated 3D point clouds. FIG. 2 illustrates this error-prone manual process that drone pilots follow to determine the points of interest required for correct drone positioning in the data acquisition process. In step 1 the pilot flies the drone straight up from the home point A with camera pointing towards the cell tower. In step 2, the pilot observes the height of the tower at drone position B. In step 3, the pilot positions the drone 5m above the tower (drone position C) with camera pointing down and selects the point of interest, center of the tower on XY plane. This manual procedure is a main obstacle that prevents automation of the drone flight and data capture process. This process brings significant cost and inserts uncertainty to the digitalization of telecom assists.

This disclosure describes a fully automated way to estimate points-of-interest, which in turn enables an automated data capture process. The embodiments disclosed here may be applied to any structure as they do not require trained visual object detection, and, therefore, there is no requirement the type of installation to be previously known. Currently deployed industry practices are to manually position the drone for data acquisition and 3D points of interest are estimated only after the 3D model is created. The embodiments disclosed herein provide estimation of the top center of the cell tower at run-time, which improves real-time orbit control of the drone.

A first process is performed for estimating the height of the cell tower using drone 102, which is equipped with sensor system 103 for estimate the depth (i.e., distances) in the scene (e.g., the sensor system comprises a Light Detection and Ranging (LiDAR) scanner that comprises a laser and a light detector). The process includes the drone starting a position A (see FIG. 2) and flying vertically to position B (see FIG. 2).

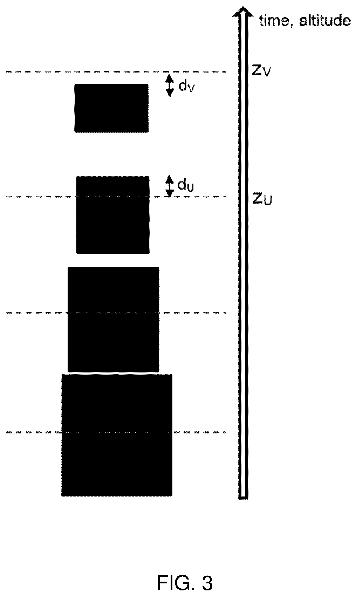

While the drone is moving from A to B, the sensor system 102 (e.g., laser and light detector) is oriented towards the cell tower. In this way, every 2s, for example, at higher and higher altitude levels depth data is obtained. This depth data (a.k.a., depth map), which comprises a set of distance values, is then filtered (e.g., all distance values (distance from light detector) larger than 20m are removed) to produce a filtered depth map (i.e., filtered depth data). In one embodiment, each distance value in the filtered depth map is associated with the coordinates of a pixel in an image. Next, a rectangular shape is fitted around the set of depth values as shown in FIG. 3. That is, FIG. 3 illustrates the rectangular shapes fitted on the filtered depth data (a.k.a., filtered depth map). The dotted lines that split the image area in two equal parts by going through the half of image height corresponds to a particular drone altitude.

In one embodiment, the height of the cell tower is calculated as a weighted sum of two selected drone altitudes, which are denoted Zu and Zv. These drone altitudes are selected because, as shown in FIG. 3, one these altitudes (Zu) is a known distance (represented by $d_u$) below the top of the cell tower while the other (Zv) is a known distance (represented by $d_v$) above the top of the cell tower as indicated by the filtered depth maps. That is, as shown in FIG. 3, the vertical distance between Zu and $Z_H$ is represented by $d_u$ and the vertical distance between Zv and $Z_H$ is represented by $d_v$. More specifically, in one embodiment, $d_u$ and $d_v$ are distances measured in units of pixels. For example, $d_u$ is the number of pixels between a vertical coordinate in a first image representing the top of the tower and a reference vertical coordinate in the first image representing Zu. Likewise, $d_v$ is the number of pixels between a vertical coordinate in a second image representing the top of the tower and a reference vertical coordinate in the second image representing Zv.

Knowing Zu, Zv, $d_u$, and $d_v$, $Z_H$ (height of the cell tower) can be calculated according to the following:

$$\text{IF } d_v < d_u$$

$$Z_H = \left(\frac{d_v}{d_v+d_u}\right) Z_u + \left(1 - \frac{d_v}{d_v+d_u}\right) Z_v \,,$$

$$\text{ELSE}$$

$$Z_H = \left(1 - \frac{d_u}{d_v+d_u}\right) Z_u + \left(\frac{d_u}{d_v+d_u}\right) Z_v.$$

In another embodiment, $Z_H$ can be calculated according to any one of the following:

$$Z_H = Z_u + md_u,$$

$$Z_H = Z_v - md_v,$$

or
$Z_H = ( (Zu + md_u) + (Zv - md_v) ) / 2$, wherein $md_v$ and $md_v$ are in units of length (e.g., meters, inches, etc.) and are derived from $d_u$ and $d_v$, respectively.

For example, $md_u$ and $md_v$ may be derived as follows:

$$md_u = \frac{D_{avg}}{f} d_u \,,$$

and

$$md_v = \frac{D_{avg}}{f} d_v,$$

where f is the focal length of the sensor system used to produce the above mentioned first and second images and Davg is the average depth in, for example, meters (as measured by, for example, the LiDAR scanner). The averaging is over the black rectangular shape, as illustrated in FIG. 3.

Another process is performed for obtaining an estimate of the center of the tower on an XY-plane (i.e., obtaining {Xc,Yc}). In a first step of the process, an initial rough estimate of {Xc,Yc} is obtained as the drone moves from position B towards position C (position above the tower, as indicated in FIG. 2), while the measurement sensors are pointing down.

Next, a refinement process is performed as follows:

Step 1: from the current drone position (i.e., while the drone is above the structure and the drone's sensor system is pointing towards the structure) use the sensor system to obtain filtered depth data.

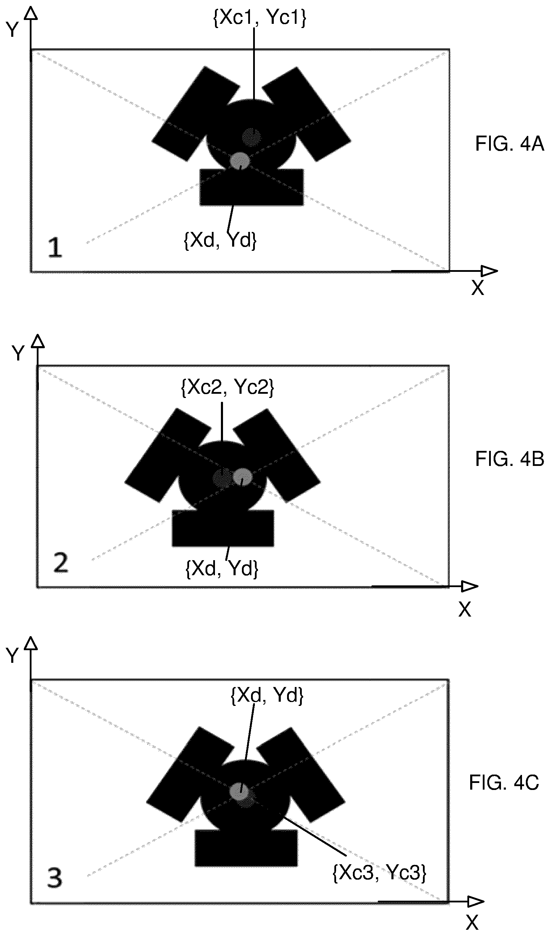

Step 2: based on the filtered depth data, identify the center of the tower and determine the position of the center of the cell tower in a rectangular (2D) image, wherein the center of this image (i.e., {Xd, Yd} as shown in FIGs. 4A, 4B, and 4C) represents the position of the drone. The filtered depth data includes a set of data points, wherein each data point has a location {x,y} within the image. The center of the cell tower can be determined by calculating the centroid of the data points within the image.

Step 3: based on the determined position of the center of the cell tower in the image, determine whether the position of center of the tower is close enough to the center of the image (i.e., is within a threshold distance of the center of image).

Step 4: if the position of the center of the cell tower is not close enough to the center of the image, then move the drone so that the position of the center of the cell tower moves closer to the center of the image and then go back to step 1. In one embodiments, to improve the drone's location, the drone is oriented according to the direction $\varphi$, where $\varphi$ is equal to: arctan ((Yc-Yd)/(Xc-Xd)), and the done is moved a distance equal to: $((Xc-Xd)^2 + (Yd-Yd)^2)^{1/2}$ in direction $\varphi$.

Step 5: determine x and y coordinates of a current position of the drone (this step is reached only if the center of the cell tower is within the threshold distance from the center of the image).

Step 6: set x and y coordinates for the center of the tower based on the determined x and y coordinates of the current position of the drone.

This above described process is illustrated in FIGs 4A, 4B, and 4C. FIG. 4A illustrates a first iteration of the process, wherein {Xd, Yd} is the center of the image, which is the position of the drone projected on the 2D plane and {Xc1,Yc1 } represents the position of the center of the cell tower in the image. In the second iteration of the process (see FIG. 4B), the position of the center of the cell tower in the next image{Xc2,Yc2} is now closer to {Xd, Yd}, but still not close enough. In the third iteration of the process (see FIG. 4C), the position of the center of the cell tower in the next image {Xc3,Yc3} is now close enough to {Xd, Yd} (i.e., D < T, where D = $((Xd-Xc)^2 + (Yd-Yc)^2)^{1/2}$, and T is the threshold value.

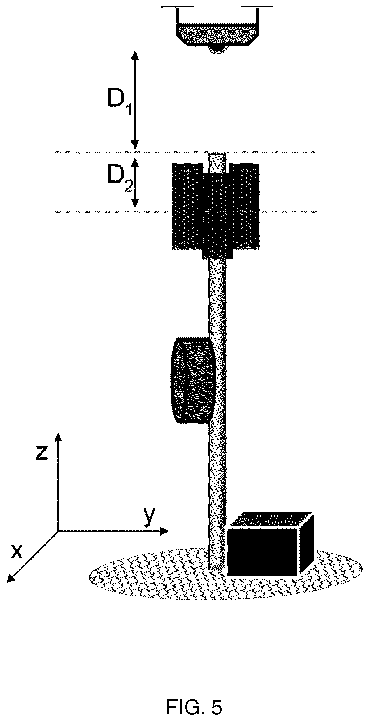

The depth data obtained in step 1 is filtered depth data, which is obtained as shown in FIG. 5. FIG. 5 illustrates a depth filtering operation at a given drone position. The filtering removes all points with depth larger than $D_1+D_2$. Here $D_1$ is the 5 meter distance from the drone to the top of the tower, but in case of uncertainty in the drone altitude, $D_1$ could be also estimated as the depth of closest objects in the depth map. $D_2$ is a safety margin, set to, for example, 1 meter, added to compensate for cases D1 estimate is smaller than the actual value due to outlier depth points. $D_1 + D_2$ determines the threshold beyond which all points in the image plain are rejected (all points with depth larger than $D_1 + D_2$ are removed and do not contribute to the cluster of depth points used to determine center of the tower).

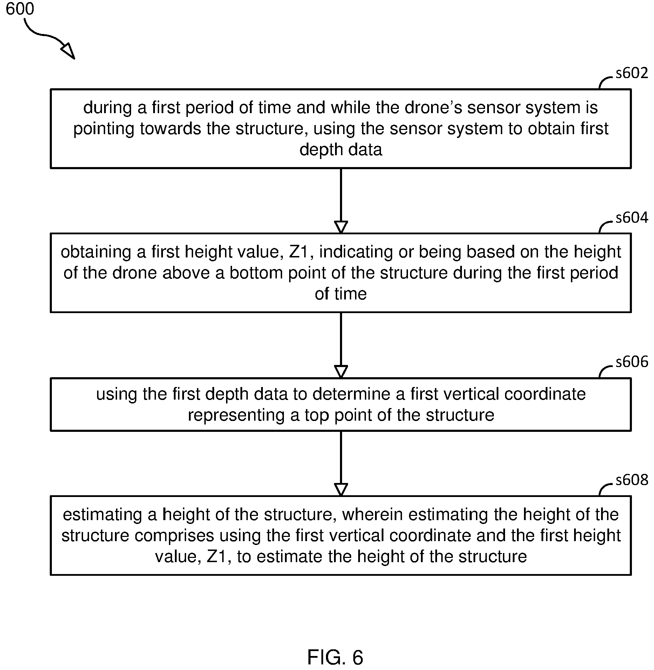

FIG. 6 is a flowchart illustrating a process 600 according to an embodiment for obtaining information about a structure (e.g., cell tower 101) using a drone equipped with a sensor system (e.g. drone 102). Process 600 may begin in step s602. Step s602 comprises, during a first period of time and while the drone's sensor system is pointing towards the structure, using the sensor system to obtain first depth data. Step s604 comprises obtaining a first height value, Z1, indicating or being based on the height of the drone above a bottom point of the structure (e.g., a height above the ground) during the first period of time. Step s606 comprise using the first depth data to determine a first vertical coordinate representing a top point of the structure. Step s608 comprises estimating a height of the structure, wherein estimating the height of the structure comprises using the first vertical coordinate and the first height value, Z1, to estimate the height of the structure.

In some embodiments estimating the height of the structure comprises using the determined first vertical coordinate and a first reference vertical coordinate to determine a first distance value, d1 (e.g., $d_u$ or $d_v$, described above);

and using d1 and Z1 to estimate the height of the structure. In some embodiments the process also includes, during a second period of time and while the drone's sensor system is pointing towards the structure, using the sensor system to obtain second depth data; obtaining a second height value, Z2, indicating or being based on the height of the drone above a bottom point of the structure during the second period of time; and using the second depth data to determine a second vertical coordinate representing a top point of the structure, wherein estimating the height of the structure further comprises using the second vertical coordinate and the second height value, Z2, to estimate the height of the structure. In some embodiments estimating the height of the structure further comprises: using the determined second vertical coordinate and a second reference vertical coordinate to determine a second distance value, d2; and using d1, d2, Z1, and Z2 to estimate the height of the structure.

In some embodiments the first depth data consists of a first set of distance values, the first depth data is filtered depth data that was filtered such that each distance value included in the first set of distance values is not greater than a threshold distance, the second depth data consists of a second set of distance values, and the second depth data is filtered depth data that was filtered such that each distance value included in the second set of distance values is not greater than the threshold distance.

In some embodiments estimating the height of the structure using d1, d2, Z1, and Z2 comprises: calculating $(d2/(d1 + d2)) \times Z1 + (1 - (d2/(d1+d2))) \times Z2$, or calculating $(1 - (d1/(d1 + d2))) \times Z1 + (d1/(d1+d2))) \times Z2$. In some embodiments d1 indicates a number of pixels between the first vertical coordinate and the first reference vertical coordinate, and d2 indicates a number of pixels between the second vertical coordinate and the second reference vertical coordinate.

In some embodiments estimating the height of the structure using d1, d2, Z1, and Z2 comprises calculating $((Z1+d1) + (Z2-d2))/2$.

In some embodiments estimating the height of the structure comprises calculating: $Z1 + d1$ or $Z1 - d1$.

In some embodiments the sensor system comprises a laser and a light detector (e.g., the sensor system comprises a LiDAR scanner).

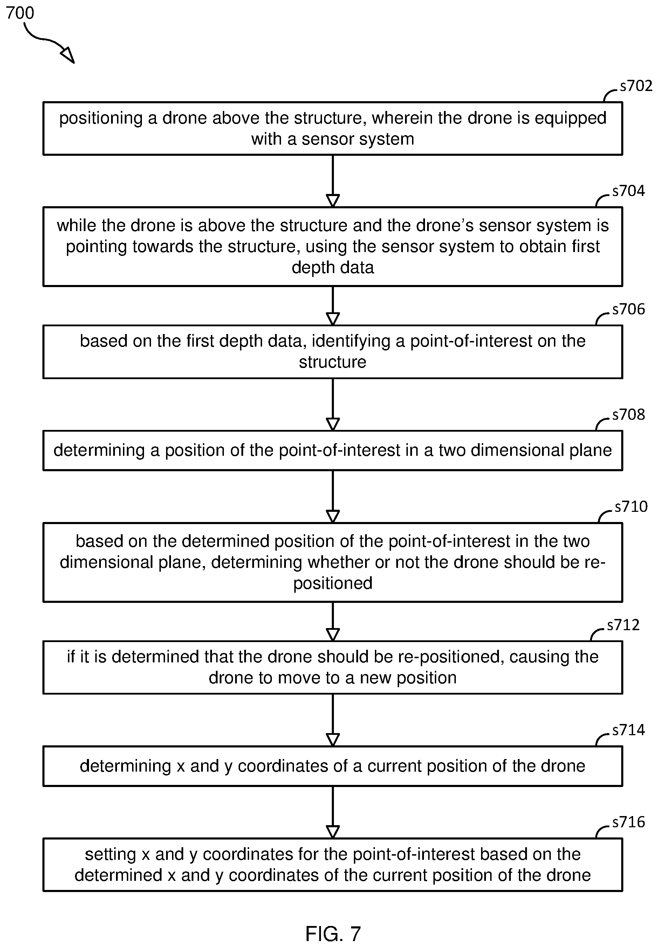

FIG. 7 is a flowchart illustrating a process 700 according to an embodiment, not according to this invention, for obtaining coordinates associated with a structure (e.g., cell tower 101). Process 700 may begin in step s702. Step s702 comprises positioning a drone (e.g., drone 102) above the structure, wherein the drone is equipped with a sensor system. Step s704 comprises, while the drone is above the structure and the drone's sensor system is pointing towards the structure, using the sensor system to obtain first depth data. Step s706 comprises, based on the first depth data, identifying a point-of-interest on the structure. Step s708 comprises determining a position of the point-of-interest in a two dimensional plane. Step s710 comprises, based on the determined position of the point-of-interest in the two dimensional plane, determining whether or not the drone should be re-positioned. Step s712 comprises, if it is determined that the drone should be re-positioned, causing the drone to move (e.g., fly) to a new position. Step s714 comprises determining x and y coordinates of a current position of the drone. And step s716 comprise setting x and y coordinates for the point-of-interest based on the determined x and y coordinates of the current position of the drone.

According to the invention, the process also includes, prior to positioning the drone above the structure, estimating a height of the structure. In some embodiments, estimating the height of the structure comprises performing process 600.

In some embodiments, the sensor system comprises a laser and a light detector.

In some embodiments, the point-of-interest is a centroid.

In some embodiments the first depth data consists of a first set of distance values, and the first depth data is filtered depth data that was filtered such that each distance value included in the first set of distance values is not greater than a threshold distance. In some embodiments, the threshold distance (TD) is based on the distance between the drone and the top of the tower (i.e., D1 shown in FIG. 5). For example, in one embodiments TD = D1 + D2.

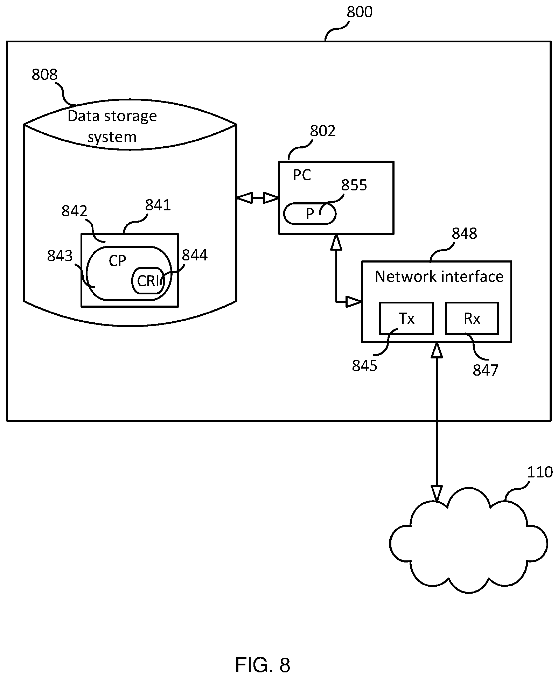

FIG. 8 is a block diagram of an apparatus 800, according to some embodiments, for performing process 700. Apparatus 800 (or any portion thereof) may be carried by drone or may be remote from the drone. As shown in FIG. 8, apparatus 800 may comprise: processing circuitry (PC) 801, which may include one or more processors (P) 855 (e.g., a general purpose microprocessor and/or one or more other processors, such as an application specific integrated circuit (ASIC), field-programmable gate arrays (FPGAs), and the like), which processors may be co-located in a single housing or in a single data center or may be geographically distributed (i.e., apparatus 800 may be a distributed computing apparatus); at least one network interface 848 comprising a transmitter (Tx) 845 and a receiver (Rx) 847 for enabling apparatus 800 to transmit data to and receive data from other nodes connected to a network 110 (e.g., an Internet Protocol (IP) network) to which network interface 848 is connected (directly or indirectly) (e.g., network interface 848 may be wirelessly connected to the network 110, in which case network interface 848 is connected to an antenna arrangement); and a storage unit (a.k.a., "data storage system") 808, which may include one or more non-volatile storage devices and/or one or more volatile storage devices. In embodiments where PC 801 includes a programmable processor, a computer program product (CPP) 841 may be provided. CPP 841 includes a computer readable medium (CRM) 842 storing a computer program (CP) 843 comprising computer readable instructions (CRI) 844. CRM 842 may be a non-transitory computer readable medium, such as, magnetic media (e.g., a hard disk), optical media, memory devices (e.g., random access memory, flash memory), and the like. In some embodiments, the CRI 844 of computer program 843 is configured such that when executed by PC 801, the CRI causes apparatus 800 to perform steps described herein (e.g., steps described herein with reference to the flow charts). In other embodiments, apparatus 800 may be configured to perform steps described herein without the need for code. That is, for example, PC 801 may consist merely of one or more ASICs. Hence, the features of the embodiments described herein may be implemented in hardware and/or software.

As demonstrated by the description above, given estimates of 3D point of the cell tower ground $Z_0$, 3D point of the cell tower top $Z_H$, camera intrinsic parameters (focal length f and image dimensions $H_J$), one can calculate the optimal offset in horizontal and vertical direction (KD and $KZ_M$) to automatically position the drone at the TSO orbit. That is, given an estimate of the height of the cell tower, as well as, camera intrinsic parameters (only focal length and image dimensions are the required intrinsic parameters), the drone performs vertical and horizontal steps of certain size, which brings it to a preferred position for TSO orbit data acquisition. From that position tower may be viewed at 45° down and the projection often tower on the image plane occupies 90% of the image height.

While various embodiments are described herein, it should be understood that they have been presented by way of example only, and not limitation. Thus, the breadth and scope of this disclosure should not be limited by any of the above described exemplary embodiments. Moreover, any combination of the above-described embodiments in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

**Claims**

1. A method (600) for obtaining information about a structure (101) using a drone (102) equipped with a sensor system (103) comprising a LiDAR scanner, the method being performed by an apparatus (800) and comprising:

   during a first period of time and while the drone's sensor system is pointing towards the structure, using (s602) the sensor system to obtain first depth data; wherein

   the first depth data consists of a first set of distance values corresponding to a first set of data points wherein each data point has a location identified by coordinates in an image, and
   the first depth data is filtered depth data that was filtered such that each distance value included in the first set of distance values is not greater than a threshold distance, to produce a filtered depth map;

   obtaining (s604) a first height value, Z1, indicating or being based on the height of the drone above a bottom point of the structure during the first period of time;
   using (s606) the first depth data to determine a first vertical coordinate representing a top point of the structure, based on associating each distance value in the filtered depth map with coordinates of a pixel in the image; and
   using the determined first vertical coordinate and a first reference vertical coordinate to determine a first distance value, d1; the method further comprising:

   during a second period of time and while the drone's sensor system is pointing towards the structure, using the sensor system to obtain second depth data; the second depth data is filtered depth data that was filtered such that each distance value is not greater than a threshold distance;
   obtaining a second height value, Z2, indicating or being based on the height of the drone above a bottom point of the structure during the second period of time; and
   using the second depth data to determine a second vertical coordinate representing a top point of the structure;
   using the determined second vertical coordinate and a second reference vertical coordinate to determine a second distance value, d2; and
   using d1, d2, Z1, and Z2 to estimate the height of the structure, whereby d1 and d2 are distances measured in units of pixels, d1 is the number of pixels between the first vertical coordinate in the first image representing the top of the tower and the first reference vertical coordinate in the first image representing Z1;
   and d2 is the number of pixels between the second vertical coordinate in the second image representing the top of the tower and the second reference vertical coordinate in the second image representing Z2.

2. The method of claim 1, wherein estimating the height of the structure using d1, d2, Z1, and Z2 comprises calculating:

$$(d2/(d1 + d2)) \times Z1 + (1 - (d2/(d1+d2))) \times Z2,$$

or

$$(1 - (d1/(d1 + d2))) \times Z1 + (d1/(d1+d2))) \times Z2.$$

3. The method of claim 1, wherein estimating the height of the structure using d1, d2, Z1, and Z2 comprises calculating:

$$((Z1+d1) + (Z2-d2))/2.$$

4. The method of claim 1, wherein estimating the height of the structure comprises calculating:

$$Z1 + d1,$$

or

$$Z1 - d1.$$

5. A computer program (843) comprising instructions (844) which when executed by processing circuitry (855) of an apparatus (800) causes the apparatus (800) to perform the method of any one of claims 1-4.

6. A carrier containing the computer program of claim 5, wherein the carrier is one of an electronic signal, an optical signal, a radio signal, and a computer readable storage medium (842).

7. An apparatus (800) for obtaining information about a structure (101) using a drone (102) equipped with a sensor system (103) comprising a LiDAR scanner, wherein the apparatus is configured to:

during a first period of time and while the drone's sensor system is pointing towards the structure, use the sensor system to obtain first depth data; wherein

the first depth data consists of a first set of distance values corresponding to a first set of data points wherein each data point has a location identified by coordinates in an image, and
the first depth data is filtered depth data that was filtered such that each distance value included in the first set of distance values is not greater than a threshold distance, to produce a filtered depth map;

obtain a first height value, Z1, indicating or being based on the height of the drone above a bottom point of the structure during the first period of time;
use the first depth data to determine a first vertical coordinate representing a top point of the structure, based on associating each distance value in the filtered depth map with coordinates of a pixel in the image; and
the apparatus being further configured to:
use the determined first vertical coordinate and a first reference vertical coordinate to determine a first distance value, d1; and to:

during a second period of time and while the drone's sensor system is pointing towards the structure, use the sensor system to obtain second depth data; the second depth data is filtered depth data that was filtered such that each distance value is not greater than a threshold distance;
obtain a second height value, Z2, indicating or being based on the height of the drone above a bottom point of the structure during the second period of time; and
use the second depth data to determine a second vertical coordinate representing a top point of the structure,
use the determined second vertical coordinate and a second reference vertical coordinate to determine a second distance value, d2; and
use d1, d2, Z1, and Z2 to estimate the height of the structure, whereby d1 and d2 are distances measured in units of pixels, d1 is the number of pixels between the first vertical coordinate in the first image representing the top of the tower and the first reference vertical coordinate in the first image representing Z1; and d2 is the number of pixels between the second vertical coordinate in the second image representing the top of the tower and the second reference vertical coordinate in the second image representing Z2.

**8.** The apparatus (800) of claim 7, wherein the apparatus is further configured to perform the method of any one of claims 1-4.

**9.** The apparatus (800) of claim 7 or 8, wherein the apparatus comprises:

> a computer readable storage medium (842); and
> processing circuitry (802) coupled to the computer readable storage medium (842).

**Patentansprüche**

**1.** Verfahren (600) zum Erhalten von Informationen über eine Struktur (101) unter Verwendung einer Drohne (102), die mit einem Sensorsystem (103) ausgestattet ist, das einen LiDAR-Scanner umfasst, wobei das Verfahren von einer Einrichtung (800) durchgeführt wird und Folgendes umfasst:

> im Laufe einer ersten Zeitspanne und während das Sensorsystem der Drohne auf die Struktur gerichtet ist, Verwenden (s602) des Sensorsystems, um erste Tiefendaten zu erhalten; wobei
> die ersten Tiefendaten aus einem ersten Satz von Entfernungswerten bestehen, die einem ersten Satz von Datenpunkten entsprechen, wobei jeder Datenpunkt eine durch Koordinaten in einem Bild identifizierte Position aufweist, und
> die ersten Tiefendaten gefilterte Tiefendaten sind, die derart gefiltert wurden, dass jeder in dem ersten Satz von Entfernungswerten eingeschlossene Entfernungswert nicht größer als eine Schwellenentfernung ist, um eine gefilterte Tiefenkarte zu erzeugen;
> Erhalten (s604) eines ersten Höhenwerts Z1, der die Höhe der Drohne über einem unteren Punkt der Struktur im Laufe des ersten Zeitraums angibt oder darauf basiert ist;
> Verwenden (s606) der ersten Tiefendaten, um eine erste vertikale Koordinate zu bestimmen, die einen oberen Punkt der Struktur darstellt, basierend auf dem Zuordnen jedes Entfernungswerts in der gefilterten Tiefenkarte zu Koordinaten eines Pixels in dem Bild; und
> Verwenden der bestimmten ersten vertikalen Koordinate und einer ersten vertikalen Referenzkoordinate, um einen ersten Entfernungswert d1 zu bestimmen;
> wobei das Verfahren weiter umfasst:

>> im Laufe eines zweiten Zeitraums und während das Sensorsystem der Drohne auf die Struktur gerichtet ist, Verwenden des Sensorsystems, um zweite Tiefendaten zu erhalten; wobei die zweiten Tiefendaten gefilterte Tiefendaten sind, die derart gefiltert wurden, dass jeder Entfernungswert nicht größer als eine Schwellenentfernung ist;
>> Erhalten eines zweiten Höhenwerts Z2, der die Höhe der Drohne über einem unteren Punkt der Struktur im Laufe des zweiten Zeitraums angibt oder darauf basiert ist; und
>> Verwenden der zweiten Tiefendaten, um eine zweite vertikale Koordinate zu bestimmen, die einen oberen Punkt der Struktur darstellt;
>> Verwenden der bestimmten zweiten vertikalen Koordinate und einer zweiten vertikalen Referenzkoordinate, um einen zweiten Entfernungswert d2 zu bestimmen; und
>> Verwenden von d1, d2, Z1 und Z2, um die Höhe der Struktur zu schätzen, wobei d1 und d2 in Pixeleinheiten gemessene Entfernungen sind und d1 die Anzahl der Pixel zwischen der ersten vertikalen Koordinate in dem ersten Bild, das die Spitze des Turms darstellt, und der ersten vertikalen Referenzkoordinate in dem ersten Bild, die Z1 darstellt, ist;
>> und d2 die Anzahl der Pixel zwischen der zweiten vertikalen Koordinate in dem zweiten Bild, die die Spitze des Turms darstellt, und der zweiten vertikalen Referenzkoordinate in dem zweiten Bild ist, die Z2 darstellt, ist.

**2.** Verfahren nach Anspruch 1, wobei das Schätzen der Höhe der Struktur unter Verwendung von d1, d2, Z1 und Z2 das Berechnen von Folgendem umfasst:

$$(d2/(d1 + d2)) \times Z1 + (1 - (d2/(d1+d2))) \times Z2$$

oder

$$(1 - (d1/(d1 + d2))) \times Z1 + (d1/(d1+d2))) \times Z2.$$

3. Verfahren nach Anspruch 1, wobei das Schätzen der Höhe der Struktur unter Verwendung von d1, d2, Z1 und Z2 das Berechnen von Folgendem umfasst:

$$((Z1+d1) + (Z2-d2))/2.$$

4. Verfahren nach Anspruch 1, wobei das Schätzen der Höhe der Struktur das Berechnen von Folgendem umfasst:

$$Z1 + d1$$

oder

$$Z1 - d1.$$

5. Computerprogramm (843), das Anweisungen (844) umfasst, die, wenn von einem Verarbeitungsschaltkreis (855) einer Einrichtung (800) ausgeführt, die Einrichtung (800) veranlassen, das Verfahren nach einem der Ansprüche 1-4 durchzuführen.

6. Träger, der das Computerprogramm nach Anspruch 5 enthält, wobei der Träger eines von einem elektronischen Signal, einem optischen Signal, einem Funksignal und einem computerlesbaren Speichermedium (842) ist.

7. Einrichtung (800) zum Erhalten von Informationen über eine Struktur (101) unter Verwendung einer Drohne (102), die mit einem Sensorsystem (103) ausgestattet ist, das einen LiDAR-Scanner umfasst, wobei die Einrichtung konfiguriert ist, um:

im Laufe einer ersten Zeitspanne und während das Sensorsystem der Drohne auf die Struktur gerichtet ist, das Sensorsystem zu verwenden, um erste Tiefendaten zu erhalten; wobei
die ersten Tiefendaten aus einem ersten Satz von Entfernungswerten bestehen, die einem ersten Satz von Datenpunkten entsprechen, wobei jeder Datenpunkt eine durch Koordinaten in einem Bild identifizierte Position aufweist, und
die ersten Tiefendaten gefilterte Tiefendaten sind, die derart gefiltert wurden, dass jeder in dem ersten Satz von Entfernungswerten eingeschlossene Entfernungswert nicht größer als eine Schwellenentfernung ist, um eine gefilterte Tiefenkarte zu erzeugen;
einen ersten Höhenwert Z1 zu erhalten, der die Höhe der Drohne über einem unteren Punkt der Struktur im Laufe des ersten Zeitraums angibt oder darauf basiert ist;
die ersten Tiefendaten zu verwenden, um eine erste vertikale Koordinate zu bestimmen, die einen oberen Punkt der Struktur darstellt, basierend auf dem Zuordnen jedes Entfernungswerts in der gefilterten Tiefenkarte zu Koordinaten eines Pixels in dem Bild; und
die Einrichtung weiter konfiguriert ist zum:
Verwenden der bestimmten ersten vertikalen Koordinate und einer ersten vertikalen Referenzkoordinate, um einen ersten Entfernungswert d1 zu bestimmen; und um:

im Laufe eines zweiten Zeitraums und während das Sensorsystem der Drohne auf die Struktur gerichtet ist, das Sensorsystem zu verwenden, um zweite Tiefendaten zu erhalten; wobei die zweiten Tiefendaten gefilterte Tiefendaten sind, die derart gefiltert wurden, dass jeder Entfernungswert nicht größer als eine Schwellenentfernung ist;
einen zweiten Höhenwert Z2 zu erhalten, der die Höhe der Drohne über einem unteren Punkt der Struktur im Laufe des zweiten Zeitraums angibt oder darauf basiert ist; und
die zweiten Tiefendaten zu verwenden, um eine zweite vertikale Koordinate zu bestimmen, die einen oberen Punkt der Struktur darstellt,
die bestimmte zweite vertikale Koordinate und eine zweite vertikale Referenzkoordinate zu verwenden, um einen zweiten Entfernungswert d2 zu bestimmen; und

d1, d2, Z1 und Z2 zu verwenden, um die Höhe der Struktur zu schätzen, wobei d1 und d2 in Pixeleinheiten gemessene Entfernungen sind, d1 die Anzahl der Pixel zwischen der ersten vertikalen Koordinate in dem ersten Bild, das die Spitze des Turms darstellt, und der ersten vertikalen Referenzkoordinate in dem ersten Bild, die Z1 darstellt, ist; und d2 die Anzahl der Pixel zwischen der zweiten vertikalen Koordinate in dem zweiten Bild, das die Spitze des Turms darstellt, und der zweiten vertikalen Referenzkoordinate in dem zweiten Bild, die Z2 darstellt, ist.

8. Einrichtung (800) nach Anspruch 7, wobei die Einrichtung weiter konfiguriert ist, um das Verfahren nach einem der Ansprüche 1-4 durchzuführen.

9. Einrichtung (800) nach Anspruch 7 oder 8, wobei die Einrichtung Folgendes umfasst:

ein computerlesbares Speichermedium (842); und

einen Verarbeitungsschaltkreis (802), der mit dem computerlesbaren Speichermedium (842) gekoppelt ist.

**Revendications**

1. Procédé (600) d'obtention d'informations sur une structure (101) en utilisant un drone (102) équipé d'un système de capteur (103) comprenant un scanner LiDAR, le procédé étant mis en œuvre par un appareil (800) et comprenant :

pendant une première période de temps et pendant que le système de capteur du drone pointe vers la structure, l'utilisation (s602) du système de capteur pour obtenir des premières données de profondeur ; dans lequel les premières données de profondeur consistent en un premier ensemble de valeurs de distance correspondant à un premier ensemble de points de données dans lequel chaque point de données présente un emplacement identifié par des coordonnées dans une image, et

les premières données de profondeur sont des données de profondeur filtrées qui ont été filtrées de sorte que chaque valeur de distance incluse dans le premier ensemble de valeurs de distance n'est pas supérieure à une distance seuil, pour produire une carte de profondeur filtrée ;

l'obtention (s604) d'une première valeur de hauteur, Z1, indiquant ou étant basée sur la hauteur du drone au-dessus d'un point inférieur de la structure pendant la première période de temps ;

l'utilisation (s606) des premières données de profondeur pour déterminer une première coordonnée verticale représentant un point supérieur de la structure, sur la base de l'association de chaque valeur de distance dans la carte de profondeur filtrée à des coordonnées d'un pixel dans l'image ; et

l'utilisation de la première coordonnée verticale déterminée et une première coordonnée verticale de référence pour déterminer une première valeur de distance, d1 ;

le procédé comprenant en outre :

pendant une seconde période de temps et pendant que le système de capteur du drone pointe vers la structure, l'utilisation du système de capteur pour obtenir des secondes données de profondeur ; les secondes données de profondeur sont des données de profondeur filtrées qui ont été filtrées de sorte que chaque valeur de distance n'est pas supérieure à une distance seuil ;

l'obtention d'une seconde valeur de hauteur, Z2, indiquant ou étant basée sur la hauteur du drone au-dessus d'un point inférieur de la structure pendant la seconde période de temps ; et

l'utilisation des secondes données de profondeur pour déterminer une seconde coordonnée verticale représentant un point supérieur de la structure ;

l'utilisation de la seconde coordonnée verticale déterminée et une seconde coordonnée verticale de référence pour déterminer une seconde valeur de distance, d2 ; et

l'utilisation de d1, d2, Z1 et Z2 pour estimer la hauteur de la structure, selon lequel d1 et d2 sont des distances mesurées en unités de pixels, d1 est le nombre de pixels entre la première coordonnée verticale dans la première image représentant le haut de la tour et la première coordonnée verticale de référence dans la première image représentant Z1 ;

et d2 est le nombre de pixels entre la seconde coordonnée verticale dans la seconde image représentant le haut de la tour et la seconde coordonnée verticale de référence dans la seconde image représentant Z2.

2. Procédé selon la revendication 1, dans lequel l'estimation de la hauteur de la structure utilisant d1, d2, Z1 et Z2 comprend le calcul :

EP 4 367 565 B1

$$(d2/(d1 + d2)) \times Z1 + (1 - (d2/(d1+d2))) \times Z2,$$

ou

$$(1 - (d1/(d1 + d2))) \times Z1 + (d1/(d1+d2))) \times Z2.$$

3. Procédé selon la revendication 1, dans lequel l'estimation de la hauteur de la structure utilisant d1, d2, Z1 et Z2 comprend le calcul :

$$((Z1+d1) + (Z2-d2))/2.$$

4. Procédé selon la revendication 1, dans lequel l'estimation de la hauteur de la structure comprend le calcul :

$$Z1 + d1,$$

ou

$$Z1 - d1.$$

5. Programme informatique (843) comprenant des instructions (844) qui, lorsqu'elles sont exécutées par des circuits de traitement (855) d'un appareil (800), amènent l'appareil (800) à mettre en œuvre le procédé selon l'une quelconque des revendications 1-4.

6. Porteuse contenant le programme informatique selon la revendication 5, dans laquelle la porteuse est un parmi un signal électronique, un signal optique, un signal radio et un support de stockage lisible par ordinateur (842).

7. Appareil (800) d'obtention d'informations sur une structure (101) en utilisant un drone (102) équipé d'un système de capteur (103) comprenant un scanner LiDAR, dans lequel l'appareil est configuré pour :

pendant une première période de temps et pendant que le système de capteur du drone pointe vers la structure, utiliser le système de capteur pour obtenir des premières données de profondeur ; dans lequel
les premières données de profondeur consistent en un premier ensemble de valeurs de distance correspondant à un premier ensemble de points de données dans lequel chaque point de données présente un emplacement identifié par des coordonnées dans une image, et
les premières données de profondeur sont des données de profondeur filtrées qui ont été filtrées de sorte que chaque valeur de distance incluse dans le premier ensemble de valeurs de distance n'est pas supérieure à une distance seuil, pour produire une carte de profondeur filtrée ;
obtenir une première valeur de hauteur, Z1, indiquant ou étant basée sur la hauteur du drone au-dessus d'un point inférieur de la structure pendant la première période de temps ;
utiliser les premières données de profondeur pour déterminer une première coordonnée verticale représentant un point supérieur de la structure, sur la base de l'association de chaque valeur de distance dans la carte de profondeur filtrée à des coordonnées d'un pixel dans l'image ; et
l'appareil étant en outre configuré pour :
utiliser la première coordonnée verticale déterminée et une première coordonnée verticale de référence pour déterminer une première valeur de distance, d1 ; et pour :

pendant une seconde période de temps et pendant que le système de capteur du drone pointe vers la structure, utiliser le système de capteur pour obtenir des secondes données de profondeur ; les secondes données de profondeur sont des données de profondeur filtrées qui ont été filtrées de sorte que chaque valeur de distance n'est pas supérieure à une distance seuil ;
obtenir une seconde valeur de hauteur, Z2, indiquant ou étant basée sur la hauteur du drone au-dessus d'un point inférieur de la structure pendant la seconde période de temps ; et
utiliser les secondes données de profondeur pour déterminer une seconde coordonnée verticale représentant un point supérieur de la structure,
utiliser la seconde coordonnée verticale déterminée et une seconde coordonnée verticale de référence pour déterminer une seconde valeur de distance, d2 ; et

utiliser d1, d2, Z1 et Z2 pour estimer la hauteur de la structure, selon lequel d1 et d2 sont des distances mesurées en unités de pixels, d1 est le nombre de pixels entre la première coordonnée verticale dans la première image représentant le haut de la tour et la première coordonnée verticale de référence dans la première image représentant Z1 ; et d2 est le nombre de pixels entre la seconde coordonnée verticale dans la seconde image représentant le haut de la tour et la seconde coordonnée verticale de référence dans la seconde image représentant Z2.

8. Appareil (800) selon la revendication 7, dans lequel l'appareil est en outre configuré pour mettre en œuvre le procédé selon l'une quelconque des revendications 1-4.

9. Appareil (800) selon la revendication 7 ou 8, dans lequel l'appareil comprend :

un support de stockage lisible par ordinateur (842) ; et
des circuits de traitement (802) couplés au support de stockage lisible par ordinateur (842).

{Xc,Yc,Z$_H$}

102

103

101

z

y

x

{Xc,Yc,Zo}

FIG. 1

FIG. 2

FIG. 3

FIG. 4A

FIG. 4B

FIG. 4C

FIG. 5

600

s602

during a first period of time and while the drone's sensor system is pointing towards the structure, using the sensor system to obtain first depth data

s604

obtaining a first height value, Z1, indicating or being based on the height of the drone above a bottom point of the structure during the first period of time

s606

using the first depth data to determine a first vertical coordinate representing a top point of the structure

s608

estimating a height of the structure, wherein estimating the height of the structure comprises using the first vertical coordinate and the first height value, Z1, to estimate the height of the structure

FIG. 6

700

s702

positioning a drone above the structure, wherein the drone is equipped with a sensor system

s704

while the drone is above the structure and the drone's sensor system is pointing towards the structure, using the sensor system to obtain first depth data

s706

based on the first depth data, identifying a point-of-interest on the structure

s708

determining a position of the point-of-interest in a two dimensional plane

s710

based on the determined position of the point-of-interest in the two dimensional plane, determining whether or not the drone should be re-positioned

s712

if it is determined that the drone should be re-positioned, causing the drone to move to a new position

s714

determining x and y coordinates of a current position of the drone

s716

setting x and y coordinates for the point-of-interest based on the determined x and y coordinates of the current position of the drone

FIG. 7

800

808

Data storage system

802

842    841

843    CP    844

CRI

PC

855

P

848

Network interface

Tx    Rx

845    847

110

FIG. 8

**EP 4 367 565 B1**

**Non-patent literature cited in the description**

- **TONINI ANDREA et al.** Remote Estimation of Target Height from Unmanned Aerial Vehicle (UAV) Images. *Remote Sensing*, 02 November 2020, vol. 12 (21)